Europäisches Patentamt

European Patent Office

Office européen des brevets

(11) Numéro de publication: **0 282 842**
**A1**

## DEMANDE DE BREVET EUROPEEN

(21) Numéro de dépôt: **88103391.4**

(22) Date de dépôt: **04.03.88**

(51) Int. Cl.⁴ **F16F 9/348**

(30) Priorité: **06.03.87 FR 8703113**

(43) Date de publication de la demande:
**21.09.88 Bulletin 88/38**

(84) Etats contractants désignés:
**DE ES GB IT**

(71) Demandeur: **Bourcier de Carbon, Christian**
**64 Boulevard Maurice Barrès**
**F-92200 Neuilly-sur-Seine(FR)**

(72) Inventeur: **Bourcier de Carbon, Christian**
**64 Boulevard Maurice Barrès**
**F-92200 Neuilly-sur-Seine(FR)**

(74) Mandataire: **Casalonga, Axel et al**
**BUREAU D.A. CASALONGA - JOSSE**
**Morassistrasse 8**
**D-8000 Munich 5(DE)**

(54) **Assemblage de piston pour amortisseur hydraulique.**

(57) L'assemblage comprend, montés sur une tige de piston, un corps de piston (1) présentant une jupe cylindrique et des passages d'huile (4a) entre la jupe et un noyau cylindrique (3) pour la fixation sur la tige de piston, un clapet flottant à double effect sous la forme d'une plaque annulaire montée avec une précontrainte déterminée entre une zone d'appui (8) de la jupe cylindrique du corps de piston (1) du côté extérieur et un moyen d'appui, du côté intérieur. La partie extérieure de la zone d'appui de la jupe cylindrique est découpée de façon que la surface d'appui (8) soit différente d'une surface comprise entre deux cercles concentriques à l'axe du corps de piston (1) par exemple délimitée par un polygone à côtés concaves (19) de façon que le pasage de l'écoulement laminaire à l'écoulement turbulent lors d'un mouvement à compression rapide ne se fasse pas simultanément sur toute la circonférence du flux d'huile divergent.

FIG.2

## ASSEMBLAGE DE PISTON POUR AMORTISSEUR HYDRAULIQUE.

La présente invention a pour objet un assemblage de piston pour amortisseur hydraulique, notamment du type monotube, destiné à être monté à l'extrémité d'une tige de piston et pouvant avantageusement être utilisé dans les véhicules automobiles.

Dans les brevets français 1 542 408 et 2 146 611 du présent inventeur, il a été décrit un piston d'amortisseur dont la caractéristique essentielle est d'assurer le freinage du piston dans les deux sens du déplacement par une seule et même valve.

Dans ce piston connu, le corps du piston est constitué par une jupe cylindrique reliée à un noyau cylindrique par des rayons entre lesquels se trouvent définis des passages d'huile. La valve assurant à elle seule le freinage de l'amortisseur dans les deux sens est constituée sous la forme d'une plaque annulaire d'acier à ressort qui, au repos, se trouve maintenue avec une légère précontrainte (de l'ordre du dixième de millimètres) entre deux sièges concentriques. A cet effet le bord interne de la valve, constitué par la plaque annulaire précitée, s'appuie sur une plaque circulaire maintenue sur la tige du piston, son bord externe s'appuyant sur la jupe du piston.

Dans le brevet français 2 146 611 est en outre prévue une rondelle de centrage de la plaque annulaire constituant la valve, qui vient s'appuyer sur une rondelle d'appui présentant un diamètre extérieur supérieur à celui de la rondelle de centrage. La précontrainte de mise en place se trouve automatiquement réalisée si la rondelle de centrage a une épaisseur légèrement inférieure à celle de la plaque annulaire constituant la valve lorsque la base du noyau cylindrique se trouve dans le même plan que la base de la jupe cylindrique du corps de piston.

Le fonctionnement est le suivant : en compression, la valve constituée par la plaque annulaire s'appuyant sur la rondelle d'appui, se déforme en cône, libérant, au voisinage de sa circonférence extérieure, un orifice circulaire par lequel s'échappe l'huile, la section totale de ce passage étant proportionnelle à la déflexion de la valve. En détente, la valve, s'appuyant au voisinage de sa périphérie extérieure sur la jupe cylindrique du corps du piston, se déforme en cône (sans inversion du sens de la déformation conique), libérant ainsi au vosinage de son alésage des passages débouchant sur des échancrures réparties sur la circonférence extérieure de la rondelle de centrage, dont le diamètre extérieur n'est inférieur que de quelques centièmes de millimètres à l'alésage de la plaque annulaire constituant la valve.

Au début du mouvement de détente, la section du passage libéré croît lentement, proportionnellement au produit de la déflexion par la largeur des échancrures de la rondelle de centrage. Puis, lorsque la vitesse de détente devient suffisante, la déflexion de la valve dépasse l'épaisseur de la rondelle de centrage, libérant alors un passage beaucoup plus grand lorsqu'augmente la déflexion de la valve.

Afin d'avoir un petit passage permanent, même avant toute déflexion de la valve, des échancrures analogues à celles de la rondelle de centrage peuvent être prévues dans la rondelle d'appui et disposées vis-à-vis des premières.

L'ensemble constitué par la rondelle de centrage échancrée et la rondelle d'appui échancrée est lui-même supporté par une rondelle plate d'écartement ayant un diamètre égal à l'alésage de la plaque annulaire constituant la valve. Cette rondelle d'écartement maintenue sur la tige du piston s'appuie elle-même sur une rondelle ou disque de retenue plus épais et de plus grand diamètre.

Il en résulte, avec des moyens très simples, une courbe dégressive très favorable au confort du véhicule automobile équipé d'un tel amortisseur, ayant une forme qui, dans les autres pistons, ne peut être obtenue qu'avec un jeu de valves beaucoup plus compliqué.

Il est assez remarquable de noter que, lorsque la déflexion de la valve dépasse l'épaisseur de la rondelle de centrage, la valve n'étant plus alors centrée par ladite rondelle pourrait risquer de se décentrer latéralement. Mais une analyse détaillée des forces hydrodynamiques s'exerçant sur la valve montre qu'il n'y a aucun risque de déplacement latéral de la valve parce qu'elle est alors automatiquement et parfaitement centrées par des forces hydrodynamiques importantes.

Grâce au petit nombre de pièces commandant le fonctionnement, un tel piston présente l'intérêt d'être très peu coûteaux. Il donne aussi une régularité remarquable des résultats en grande série. Mais son plus grand avantage est celui de permettre d'associer un très grand confort à une excellente tenue de route du véhicule équipé de l'amortisseur.

Une étude approfondie des propriétés d'un tel piston montre un fonctionnement pratiquement parfait dans le mouvement de détente, mais il n'en est pas de même dans les mouvements rapides de compression qui, dans certains conditions, révèlent des défauts résultant du fait que le contrôle s'effectue sur des flux de liquide divergents, alors qu'il s'effectue sur des flux convergents dans le mouvement de détente.

Ces défauts sont de deux sortes : tout d'abord un passage beaucoup plus rapide de l'écoulement laminaire à l'écoulement turbulent, ce qui nuit à la qualité du roulement, ensuite, sur quelques véhicules, l'apparition de sifflements difficiles à éviter.

Pour atténuer ces défauts, la solution a jusqu'ici consisté soit à utiliser une valve dont le diamètre extérieur ne dépasse que de très peu l'alésage de la jupe cylindrique du piston, soit à décolleter l'extérieur de la jupe, pour que la surface d'appui de la valve sur la jupe soit aussi réduite que possible.

Cependant aucune de ces deux solutions ne permet d'éviter des sifflements pendant le mouvement de compression sur certains véhicules particulièrement sensibles.

La présente invention a pour objet différents perfectionnements à ce type de piston.

La présente invention a ainsi pour objet d'apporter un remède efficace aux sifflements et de diminuer sensiblement les inconvénients qui résultent du passage de l'écoulement laminaire à l'écoulement turbulent.

Un objet de l'invention est en particulier de rendre progressif le passage de l'écoulement laminaire à l'écoulement turbulent lors d'un mouvement de compression.

Un autre objet de la présente invention est de retarder le passage de l'écoulement laminaire à l'écoulement turbulent.

L'assemblage de piston pour amortisseur hydraulique, notamment du type monotube, destiné à être monté à l'extrémité d'une tige de piston, selon l'invention, comprend un corps de piston présentant une jupe cylindrique et des passages d'huile entre ladite jupe et un noyau cylindrique pour la fixation sur la tige de piston; un clapet flottant à double effet sous la forme d'au moins une plaque annulaire montée avec une précontrainte déterminée entre une zone d'appui de la jupe cylindrique du corps de piston, du côté extérieur, et un moyen d'appui, du côté intérieur. Selon l'invention, la zone d'appui extérieur présente des moyens pour que le passage de l'écoulement laminaire à l'écoulement turbulent ne se fasse pas simultanément sur toute la circonférence.

Dans un mode de réalisation préféré, la zone d'appui extérieure de la jupe cylindrique présente au moins une région d'appui située à une certaine distance radiale de l'axe du corps de piston et au moins une autre région d'appui située à une distance radiale différente du même axe.

Dans un mode de réalisation préféré de l'invention, la partie extérieure de la zone d'appui de la jupe cylindrique est découpée de façon que la surface d'appui soit différente d'une surface comprise entre deux cercles concentriques à l'axe du corps de piston. La surface d'appui peut être avantageusement délimitée à son extérieur par un polygone à côtés droits ou de préférence concaves, centré sur l'axe du corps du piston. Dans un autre mode de réalisation la surface d'appui peut être délimitée à son extérieur par un cercle décentré par rapport à l'axe du corps de piston.

Dans tous les cas une telle structure de la zone d'appui extérieure de la plaque annulaire constituant la valve permet d'éviter que le passage de l'écoulement laminaire à l'écoulement turbulent se fasse simultanément sur toute la circonférence comme c'était le cas dans les dispositifs de l'art antérieur. L'expérience montre qu'un tel dessin a pour résultat d'éliminer les sifflements qu'il n'était pas possible d'éviter avec les solutions précédentes et qu'en plus il améliore la douceur du roulement du véhicule équipé d'un tel amortisseur. On peut estimer qu'avec les solutions précédentes, à cause de la symétrie circulaire, le passage de l'écoulement laminaire à l'écoulement turbulent se fait au même instant, donc assez brutalement, sur tous les points de la circonférence. Avec la nouvelle structure préconisée selon la présente invention, il n'en est plus de même, le passage de l'écoulement laminaire à l'écoulement turbulent se faisant d'une façon progressive et non plus au même instant sur tous les points de la circonférence.

Selon un autre aspect de la présente invention et dans le cas où l'assemblage de piston comprend une rondelle d'appui du côté intérieur munie d'une pluralité d'échancrures réparties sur sa circonférence extérieure, une rondelle de centrage de la plaque annulaire coopérant avec l'alésage de cette dernière et munie d'une pluralité d'échancrures réparties sur sa circonférence extérieure, et un disque de retenue, le disque de retenue présente au moins un téton en saillie capable de pénétrer dans un logement correspondant du noyau cylindrique du corps de piston et de traverser des perforations correspondantes pratiquées dans la rondelle d'appui et la rondelle de centrage de façon à orienter l'une par rapport à l'autre la rondelle d'appui et la rondelle de centrage en maintenant en regard leurs échancrures respectives et à orienter lesdites rondelles par rapport au corps de piston.

Les tétons en saillie peuvent être formés par simple emboutissage ou par tout autre moyen.

Grâce à cette disposition, qui permet un centrage parfait de la rondelle d'appui et de la rondelle de centrage par rapport aux passages d'huile du corps de piston, il est possible de retarder le passage de l'écoulement laminaire à l'écoulement turbulent.

La présente invention sera mieux comprise à l'étude de quelques modes de réalisation décrits à titre nullement limitatif et illustrés par les dessins annexés sur lesquels :

la figure 1 est une vue en coupe - schématique d'un assemblage de piston selon l'invention, la coupe du corps de piston étant faite selon la ligne brisée I-I de la figure 2;

la figure 2 est une vue de dessous du corps de piston vue selon la ligne II-II de la figure 1, montrant en particulier le dessin de la zone d'appui extérieur de la jupe cylindrique;

la figure 3 est une vue analogue à la figure 2 montrant une variante de dessin hexagonal de la zone d'appui extérieur;

la figure 4 est une autre variante de la figure 2 montrant un dessin circulaire excentré de la zone d'appui extérieur; et

la figure 5 montre en vue de dessus la structure de la rondelle de centrage échancrée utilisée dans l'assemblage de la figure 1, la rondelle d'appui échancrée ayant une structure identique à l'exception de son diamètre extérieur.

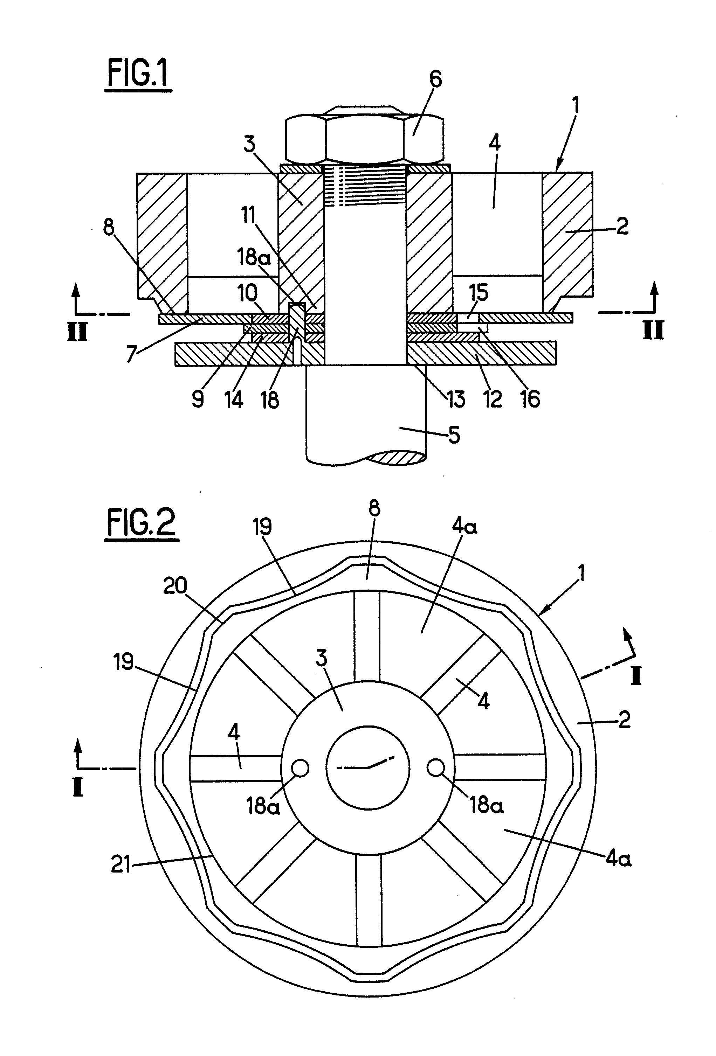

Tel qu'il est illustré sur les figures 1 et 2 où les épaisseurs de certaines pièces ont été augmentées pour faciliter la compréhension, l'assemblage de piston selon l'invention comprend un corps de piston référencé 1 dans son ensemble constitué par une jupe cylindrique 2 reliée à un noyau cylindrique central 3 par des rayons 4, au nombre de huit dans l'exemple illustré, et définissant ainsi entre eux des passages d'huile 4a (figure 2) à travers le corps de piston 1. On comprendra bien entendu que les rayons 4 qui ne s'étendent pas jusqu'à la surface de base du noyau cylindrique 3, pourraient être en nombre différent. Le corps de piston 1 est monté sur l'extrémité de la tige de piston 5 qui traverse le noyau cylindrique 3, la fixation étant complétée par serrage de l'écrou 6.

La valve assurant à elle seule le freinage de l'amortisseur dans les deux sens et qui est la seule pièce mobile de l'assemblage de piston, est constituée sous la forme d'une plaque annulaire 7 en acier à ressort. On pourrait également envisager d'utiliser plus d'une plaque annulaire pour constituer la valve par empilement. La plaque annulaire 7 s'appui du côté extérieur sur une zone ou surface d'appui 8 de la jupe cylindrique 2 et, du côté intérieur, sur une rondelle d'appui 9 maintenue sur la tige 5. La plaque annulaire 7 constitue donc un clapet flottant à double effet qui, au repos, est maintenu avec une légère précontrainte, de l'ordre d'un dixième de millimètre, entre deux sièges concentriques.

Au repos, la plaque annulaire 7 est centrée par une rondelle de centrage 10 maintenue sur la tige de piston 5 et qui coopère avec l'alésage de la plaque annulaire 7. Le diamètre extérieur de la rondelle de centrage 10 n'est inférieur que de quelques centièmes de millimètres à l'alésage de la plaque 7. Le diamètre extérieur de la rondelle d'appui 9 est légèrement supérieur à celui de la rondelle de centrage 10 de façon à assurer un appui périphérique pour la partie intérieure de la plaque annulaire 7 voisine de son alésage. La précontrainte de mise en place de la plaque annulaire 7 constituant la valve est automatiquement réalisée par le fait que la rondelle de centrage 10 a une épaisseur légèrement inférieure à celle de la plaque annulaire 7 et par le fait que la surface frontale de base 11 du noyau cylindrique 3 se trouve dans le même plan que la zone d'appui 8 de la jupe cylindrique 2.

L'assemblage de piston représenté comprend encore un disque de retenue 12 maintenu sur la tige de piston 5 et s'appuyant sur cette dernière par un épaulement 13. Le disque de retenue 12 est constitué par une rondelle plus épaisse que les précédentes et de plus grand diamètre. Le diamètre du disque de retenue est de préférence tel que sa périphérie se trouve sensiblement en regard de la zone d'appui 8 de la jupe cylindrique 2. Entre la rondelle d'appui 9 et la disque de retenue 12 est encore montée une rondelle d'écartement 14 maintenue sur la tige de piston 5. Le diamètre extérieur de la rondelle d'écartement 14 est égal au diamètre de l'alésage de la plaque annulaire 7 ou très proche de ce dernier.

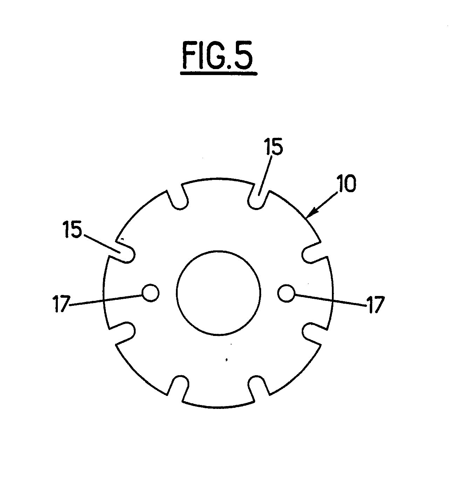

La rondelle de centrage 10 illustrée en vue de dessus sur la figure 5 présente une pluralité d'échancrures 15 réparties sur sa circonférence extérieure. Dans l'exemple illustré, ces échancrures sont au nombre de huit chacune correspondant à l'un des passages 4a. La rondelle d'appui 9 présente également une pluralité d'échancrures 16 de forme analogue aux échancrures 15 et réparties sur la circonférence extérieure. Les échancrures 16 sont également, dans l'exemple illustré, au nombre de huit et se trouvent en regard des échancrures 15.

Le montage de l'assemblage se fait, comme illustré sur la figure 1, par empilage sur la tige de piston 5 du disque de retenue 12, de la rondelle d'écartement 14, de la rondelle d'appui 9, de la rondelle de centrage 10 avec la plaque annulaire 7 et du corps de piston 1, l'ensemble étant serré par l'écrou 6.

Cet empilage est en outre, selon l'invention, orienté de manière précise au moyen de deux tétons en saillie 18 solidaires du disque de retenue 12, obtenus par simple emboutissage, et capables de traverser des perforations correspondantes pratiquées respectivement dans la rondelle d'écartement 14, la rondelle d'appui 9 et la rondelle de centrage 10. On voit sur la figure 5 les deux perforations 17 de la rondelle de centrage 10 disposées de façon diamètralement opposée. Les tétons 18 peuvent enoutre pénétrer partiellement dans deux logements 18a pratiqués dans le noyau cylindrique 3 du corps de piston 1. Les perforations précitées ainsi que les logements 18a sont disposés de façon que les échancrures 15 et 16 soient en regard les unes des autres comme illustré sur la figure 1 et se trouvent en outre en regard des passages d'huile 4a du corps de piston 1.

Bien que l'on ait utilisé dans l'exemple illustré deux tétons en saillie en comprendra bien entendu qu'un nombre différent de tétons en saillie pourrait parfaitement être envisagé.

En se reportant à la figure 2, on voit que la partie extérieure de la face d'appui de la jupe cylindrique 2 est découpée de façon que la surface d'appui 8 soit délimitée vers l'extérieur par une figure géométrique analogue à un octogone à côtés concaves 19 centré sur l'axe du corps de piston 1. Dans l'exemple illustré sur la figure 2, les zones des sommets de cet octogone sont des portions d'arc circulaire 20 qui se trouvent en regard des rayons 4. La surface d'appui 8 se trouve délimitée vers l'intérieur par l'alésage 21 de la jupe cylindrique 2 et vers l'extérieur par la figure géométrique définie par la succession des arcs circulaires de sommets 20 et des côtés concaves 19. La surface d'appui 8 présente donc une épaisseur réduite et variant continuellement, à l'endroit de chacun des passages d'huile 4a dans la zone où les côtés concaves 19 se rapprochent le plus de l'alésage 21 et une épaisseur maximale en regard des rayons 4 dans les zones des sommets du polygone, délimitées par les portions circulaires 20. Les modifications de dimension radiale de la surface d'appui 8 font que le passage de l'écoulement laminaire à l'écoulement turbulent se fait d'une manière progressive et non plus au même instant sur tous les points de la circonférence. Bien que l'on ait ici illustré une forme concave des côtés 19, on comprendra que l'on pourrait également envisager une forme convexe.

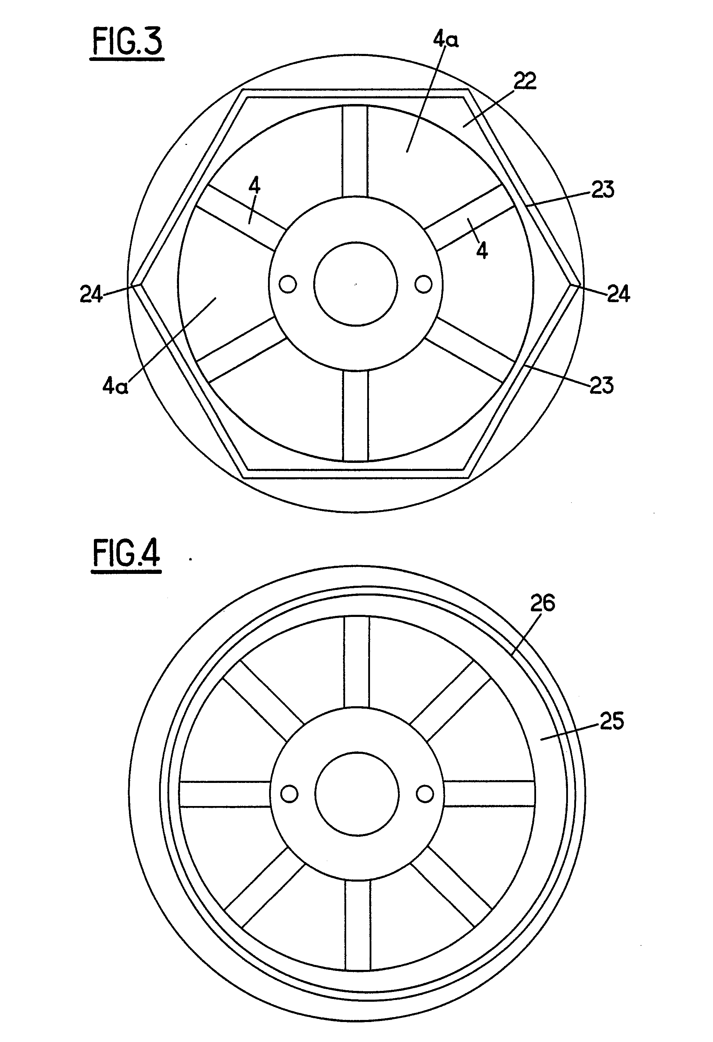

Les variantes illustrées sur les figures 3 et 4 montrent des surfaces d'appui de forme différente.

Sur la figure 3, où les pièces identiques portent les mêmes références, on a illustré à titre d'exemple, une surface d'appui 22 délimitée à l'extérieur par un hexagone régulier à côtés droits 23. Contrairement à ce qui était le cas dans l'exemple illustré sur la figure 2 où les rayons 4 se trouvaient en regard des sommets 20 du polygone, dans la variante de la figure 3, le corps de piston présente six passages 4a aux côtés 23 à l'endroit des zones de dimension radiale minimale de la surface d'appui 22. On pourrait bien entendu envisager également d'orienter les rayons 4, en regard des six sommets 24 de l'hexagone.

Dans tous les cas les passages d'huile permanents définis par les échancrures en regard 15 et 16 présentent un nombre et une orientation leur permettant de se trouver tous, soit en regard d'un passage d'huile 4a comme illustré sur la figure 1, soit sous un rayon 4, de façon à assurer la symétrie de l'écoulement.

Dans la variante de la figure 4, la surface d'appui 25 est délimitée à l'extérieur par un cercle 26, décentré par rapport à l'axe du corps de piston. Là encore on retrouve donc une dissymétrie permettant d'assurer que le passage d'écoulement laminaire à l'écoulement turbulent ne se fasse pas simultanément sur toute la circonférence.

L'asemblage de l'invention tel qu'il est illustré sur la figure 1 fonctionne de la manière suivante lorsqu'il est monté dans un amortisseur : en compression, la plaque annulaire 7 s'appuyant sur la rondelle d'appui 9, libère, à l'endroit de la surface d'appui 8, un orifice circulaire par lequel s'échappe l'huile, la section totale de ce passage étant proportionnelle à la déflexion de la plaque 7. En détente, la plaque 7 s'appuyant sur la surface d'appui 8 se déforme en cône, dans le même sens que précédemment, libérant dans la zone de son alésage des passages débouchant sur les échancrures 15. Au début du mouvement de détente, la section du passage libéré croît lentement, proportionnellement au produit de la déflexion par la largeur des échancrures 15. Puis, lorsque la vitesse de détente devient suffisante, la déflexion de la plaque 7 dépasse l'épaisseur de la rondelle de centrage 10, libérant alors un passage beaucoup plus grand lorsqu'augmente la déflexion de la plaque 7.

Les échancrures 16 assurent, en coopération avec la rondelle d'écartement 14, un petit passage d'huile permanent même avant toute déflexion de la plaque 7.

Grâce à la présente invention l'écoulement du flux de liquide divergent ne passe pas simultanément sur toute la circonférence de l'état laminaire à l'état turbulent lors d'un mouvement rapide de compression ce qui permet d'éviter les défauts mentionnés préalablement.

Par ailleurs le centrage parfait réalisé d'une part entre les différentes échancrures 15 et 16 d'autre part entre l'ensemble de ces échancrures et les passages d'huile 4a permet de retarder le passage de l'état laminaire à l'état turbulent.

On notera que ce centrage pourrait être réalisé par d'autres moyens. En particulier les tétons 18 pourraient être remplacés par de simples perforations réalisées dans le disque de retenue 12. Une tige de centrage introduite à travers une telle perforation du disque 12, à travers les perforations telles que 17 des différentes rondelles 14, 9 et 10 et jusque dans un logement 18a, permettrait alors, lors du montage de l'ensemble, de centrer les différentes pièces. Ce centrage serait alors maintenu, après le montage et le retrait de la tige, par le simple serrage de l'empilement par l'écrou 6.

## Revendications

1. Assemblage de piston pour amortisseur hydraulique, notamment du type monotube, destinée à être monté à l'extrémité d'une tige de piston (5) et comprenant un corps de piston (1) présentant une jupe cylindrique (2) et des passages d'huile (4a) entre ladite jupe et un noyau cylindrique (3) pour la fixation sur la tige de piston, un clapet flottant à double effet sous la forme d'au moins une plaque annulaire (7) montée avec une précontrainte déterminée entre une zone d'appui de la jupe cylindrique du corps de piston, du côté extérieur et un moyen d'appui, du côté intérieur, caractérisé par le fait que la zone d'appui extérieure présente des moyens pour que le passage de l'écoulement laminaire à l'écoulement turbulent ne se fasse pas simultanément sur toute la circonférence.

2. Assemblage selon la revendication 1, caractérisé par le fait que la zone d'appui de la jupe cylindrique présente au moins une région d'appui située à une certaine distance radiale de l'axe du corps de piston et au moins une autre région d'appui située à une distance radiale différente du même axe.

3. Assemblage de piston selon les revendications 1 ou 2, caractérisé par le fait que la partie extérieure de la zone d'appui de la jupe cylindrique est découpée de façon que la surface d'appui (8) soit différente d'une surface comprise entre deux cercles concentriques à l'axe du corps de piston.

4. Assemblage de piston selon la revendication 3, caractérisé par le fait que la surface d'appui (8) est délimitée à son extérieur par un polygone à côtés droits, concaves ou convexes centré sur l'axe du corps de piston.

5. Assemblage de piston selon la revendication 4, caractérisé par le fait que chaque côté du polygone se trouve en regard d'un passage d'huile (4a).

6. Assemblage de piston selon la revendication 4, caractérisé par le fait que chaque côté du polygone se trouve en regard d'un rayon (4) du corps de piston séparant deux passages d'huile (4a) adjacents.

7. Assemblage de piston selon la revendication 3, caractérisé par le fait que la surface d'appui (25) est délimitée à son extérieur par un cercle décentré par rapport à l'axe du corps de piston.

8. Assemblage de piston selon l'une quelconque des revendications précédentes, caractérisé par le fait que la zone d'appui extérieur de la jupe cylindrique (2) est dans le même plan que la face frontale du noyau cylindrique (3) et que le moyen d'appui intérieur comprend une rondelle de centrage (10) de la plaque annulaire (7) coopérant avec l'alésage de cette dernière et une rondelle d'appui (9) présentant un diamètre extérieur supérieur à celui de la rondelle de centrage (10), les deux rondelles précitées état maintenues sur la tige de piston (5).

9. Assemblage de piston selon la revendication 8, caractérisé par le fait que le moyen d'appui intérieur comprend en outre un disque de retenue (12) maintenu sur la tige de piston (5) et présentant un diamètre extérieur tel que sa périphérie se trouve sensiblement en regard d'au moins de portions de la zone d'appui extérieur de la jupe cylindrique (2).

10. Assemblage de piston selon la revendication 8, caractérisé par le fait que la rondelle de centrage (10) présente une pluralité d'échancrures (15) réparties sur sa circonférence extérieure.

11. Assemblage de piston selon la revendication 9, caractérisé par le fait que la rondelle de centrage (10) et la rondelle d'appui (9) présentent une pluralité d'échancrures (15, 16) réparties sur leurs circonférences respectives, lesdites échancrures étant maintenues en regard les unes des autres et orientées par rapport aux passages d'huile (4a) par au moins un téton en saillie (18) et une rondelle d'écartement (14) étant en outre montée sur la tige de piston entre la rondelle d'appui (9) et le disque de retenue (12).

12. Assemblage de piston d'amortisseur hydraulique, notamment du type monotube, destiné à être monté à l'extrémité d'une tige de piston (5) et comprenant un corps de piston (1) présentant une jupe cylindrique (2), plusieurs passages d'huile (4a) entre ladite jupe et un noyau cylindrique (3) pour la fixation sur la tige de piston; un clapet flottant à double effet sous la forme d'au moins une plaque annulaire (7) montée avec une précontrainte déterminée entre une zone d'appui (8) de la jupe cylindrique du corps de piston, du côté extérieur, se trouvant dans le même plan que la face frontale du noyau cylindrique et une rondelle d'appui (9), du côté intérieur, munie d'une pluralité d'échancrures (16) réparties sur sa circonférence extérieure; une rondelle de centrage (10) de la plaque annulaire (7) coopérant avec l'alésage de cette dernière et étant munie d'une pluralité d'échancrures (15) réparties sur sa circonférence extérieure; un disque de retenue (12); caractérisé par le fait que le disque de retenue (12) présente au moins un téton en saillie (18) capable de pénétrer dans un logement correspondant (18a) du noyau cylindrique du corps de piston et de traverser des perforations corrspondantes (17) pratiquées dans la rondelle d'appui (9) et la rondelle de centrage (10) de façon à orienter l'une par rapport à l'autre, la rondelle d'appui (9) et la rondelle de centrage (10) en maintenant en regard leurs échancrures respectives (15, 16) et à orienter lesdites rondelles (9, 10) par rapport au corps de piston (1).

13. Assemblage de piston selon la revendication 12, caractérisé par le fait qu'il comprend en outre une rondelle d'écartement (14) montée entre la rondelle d'appui (9) et le disque de retenue (12), la rondelle d'écartement ayant un diamètre extérieur égal au diamètre de l'alésage de la plaque annulaire (7) ou très proche de ce dernier et présentant des perforations pour le passage des tétons (18).

14. Assemblage de piston selon les revendications 12 ou 13, caractérisé par le fait que le téton en saillie est remplacé par une perforation adaptée au passage d'une tige de centrage introduite lors du montage, le centrage des différentes pièces étant maintenu par serrage, après retrait de la tige de centrage.

0 282 842

### FIG.1

### FIG.2

## FIG.3

## FIG.4

# FIG.5

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 248 442  (BOURCIER DE CARBON DE PREVINQUIERES)<br>* Figures 1-4; page 3, lignes 17-23 *<br>--- | 1,8-12 | F 16 F    9/348 |
| A | FR-A-2 500 899  (ALLINQUANT)<br>* Figures 1,2 *<br>--- | 14 | |
| A | US-A-3 747 714  (BOURCIER DE CARBON)<br>* Figure 1 *<br>--- | 1 | |
| A | FR-A-1 288 674  (FICHTEL & SACHS)<br>* Figures 1-6 *<br>--- | 2-4 | |
| A | US-A-3 837 445  (PIERLE)<br>* Figures 1-6; colonne 2, lignes 47-53 *<br>--- | 1 | |
| A,D | FR-A-2 146 611  (BOURCIER DE CARBON)<br>--- | | |
| A,D | FR-A-1 542 408  (BOURCIER DE CARBON)<br>----- | | |

|  |  |  | DOMAINES TECHNIQUES RECHERCHES (Int. Cl.4) |
|---|---|---|---|
| | | | F 16 F |

**Le présent rapport a été établi pour toutes les revendications**

| Lieu de la recherche | Date d'achèvement de la recherche | Examinateur |
|---|---|---|
| LA HAYE | 14-06-1988 | TORSIUS A. |